# NEW EUROPEAN PATENT SPECIFICATION

(11) **EP 1 879 466 B2**
(45) Date of publication and mention of the opposition decision: **06.05.2015**
(45) Mention of the grant of the patent: 25.04.2012
(21) Application number: 06716957.3
(22) Date of filing: 02.03.2006
(51) Int. Cl.: A23D 7/00, A23L 1/00

(54) **FOODSTUFF PARTICULATE LIPID COMPOSITION**
TEILCHENFÖRMIGE NAHRUNGSMITTEL-LIPID-ZUSAMMENSETZUNG
COMPOSITION LIPIDIQUE PARTICULAIRE ALIMENTAIRE

(30) Priority: 04.03.2005 SE 0500498
(43) Date of publication of application: 23.01.2008
(73) Proprietor: DSM IP Assets B.V., 6411 TE Heerlen (NL)
(72) Inventor: HERSLÖF, Bengt, S-114 21 Stockholm (SE); TINGVALL, Per, S-738 50 Norberg (SE); KORNFELDT, Anna, S-724 62 Västerås (SE)
(74) Representative: Schiener, Jens
(86) International application number: PCT/SE2006/000270
(87) International publication number: WO 2006/093459

(56) References cited:
- EP-A2- 0 074 050
- EP-A2- 1 116 515
- WO-A1-95/20943
- WO-A1-97/35487
- WO-A1-99/44585
- WO-A1-2004/000273
- WO-A1-2004/062382
- WO-A2-2004/009054
- WO-A2-2004/080199
- GB-A- 2 192 527
- JP-A- 2000 109 882
- US-A- 4 610 868
- US-A- 4 810 518
- US-A- 5 668 183
- US-A- 5 672 358
- US-A- 5 716 639
- US-A- 5 891 476
- JP 2000 109882 A 18.04.2000 (TRANSLATION)
- Wikipedia Auszug über Lignin-Sulfonate vom 05.04.2014
- LLADSER, M. ET AL: 'The use of supports in the lyophilization of oil-in water emulsions' J. PHARM. PHARMAC., no. 20, 1968, pages 450 - 455
- CHRISTENSEN, K. L. ET AL: 'Preparation of redispersible dry emulsions by spray drying' INTERNATIONAL JOURNAL OF PHARMACEUTICS 212 2001, pages 187 - 194
- CHRISTENSEN K.L. ET AL: 'Technical optimisation of redispersible dry emulsions' INTERNATIONAL JOURNAL OF PHARMACEUTICS 212 2001, pages 195 - 202
- Datasheet "Sipernat" D17

## Description

### FIELD OF THE INVENTION

The present invention relates to a foodstuff particulate lipid composition. More specifically, the invention relates to a foodstuff particulate lipid composition comprising a non-lipid carrier, its use, and a method for its manufacture.

### BACKGROUND OF THE INVENTION

Oil-in-water emulsions for human consumption are widely used in the foodstuff industry. Due to their heterogeneous nature all emulsions are basically unstable. A frequent problem with such emulsions is physical storage stability, another microbial degradation. Their often high content of water is problematic also from a transport perspective by adding substantive weight to the respective product, thereby increasing transport and storage costs. Therefore the respective oil-in-water emulsion is usually prepared a short time before it is used rather than stored for an extended period of time.

### OBJECTS OF THE INVENTION

The present invention seeks to overcome one or several of the aforementioned problems by providing a means for preparing an oil-in-water emulsion, which means is stable for long-term storage and can be easily handled in standard and non-standard industrial processes used in the foodstuff industry or even by a consumer.

Further objects of the invention will be apparent from the following summary of the invention, the description of preferred embodiments thereof, and the appended claims.

### SUMMARY OF THE INVENTION

According to the present invention is provided a foodstuff particulate lipid composition as defined in the claims comprising a particulate solid non-lipid carrier and an oil-in-water emulsion on the carrier capable of being released from the carrier on contact with aqueous media to form an oil-in-water emulsion in said aqueous media.

According one preferred aspect of the invention the particle size of the composition of the invention is determined by the particle size of the carrier, the composition substantially consisting of particles, each comprising a single carrier particle to which oil-in-water emulsion adheres.

According to another preferred aspect of the invention the particle size of the composition of the invention is determined by the capability of two or more particles, each comprising a single carrier particle to which oil-in-water emulsion adheres, to form larger aggregates.

It is preferred for the particulate lipid composition of the invention to be free-flowing so as to be capable of being processed in equipment used in the foodstuff industry.

According to a basic aspect of the invention the mean weight of the particles of the composition of the invention is preferably 10 mg or lower, more preferred 1 mg or lower, most preferred 0.1 mg or lower.

According to an alternative basic aspect of the invention carrier particles of a larger size are used such as, for instance, oat or corn flakes, to bring the mean weight of the particles of the composition of the invention to more than 5 mg or 10 mg or even 50 mg.

An important aspect of the invention is that the carrier must not dissolve in the oil-in-water emulsion or otherwise be substantially affected by it, this being a condition for the oil-in-water emulsion to be preserved substantially unchanged for storage and for release in contact with aqueous media

The oil-in-water emulsion of the invention comprises a non-polar lipid and a lipidic emulsifier. Suitable oil-in-water emulsions including non-polar lipids and lipidic emulsifiers for incorporation into the composition of the invention are disclosed in U.S. patents nos. 6,517,883 (Herslöf et al.), 6,355,693 (Herslöf et al.), and 5,688,528 (Carlsson et al.). According to an advantages aspect of the invention the oil-in-water emulsion may comprise nutrients, such as arginine or cysteine; vitamins, such as vitamin A; antioxidant; colourant; flavouring.

The non-polar lipid of the invention is preferably a triglyceride, which is solid, semi-solid, or liquid at room temperature, selected from natural, semi-synthetic and synthetic oil. Natural oils are preferably based on the combination of mainly, that is, to more than 90% by weight, preferably to more than 95% by weight, palmitic, oleic, linoleic, linolenic, and stearic esters of glycerol are preferred. Most preferred is palm oil and its equivalent confectionary fats, such as coconut oil, palm kernel oil, cocoa butter; partially hydrogenated soybean oil; partly hydrogenated rapeseed oil; sunflower oil and its equivalent liquid vegetable oils, such as soybean oil, rapeseed oil, safflower oil, olive oil, corn oil, groundnut oil, linseed oil, rice bran oil, and sesame oil; animal fats and oils, such as fish oil, butter fat, lard, tallow, their fractions and mixtures thereof. The weight ratio of non-polar lipid to emulsifier is preferably from 6:1 to 60:1, more preferred from 10:1 to 30:1.

The lipidic emulsifier of the invention comprises galactolipid material, such as fractionated oat oil. A preferred galactolipid material comprises 20% by weight to 30% by weight of galactolipids, mainly digalactodiacylglycerol, and from 10% by weight to 15% by weight of other polar lipids. Other emulsifiers can be of natural or synthetic, including semi-synthetic, origin. Particularly preferred are emulsifiers selected from mono- and diglycerides, in particular of lauric, myristic, palmitic, stearic, oleic, linoleic, and linolenic acid, their mixtures and acid esters, in particular their acetates; sorbitan esters and polysorbates; polyglycerol esters; sucrose esters; propylene glycol mono fatty acid esters; esters of lactic acid, succinic acid, fruit acid; lecithins; specific membrane lipids, such as phospholipids, galactolipids, and sphingolipids.

The carrier of the invention is preferably selected from foodstuff of vegetable, animal or mixed origin. Preferably the carrier is capable of passing at least the upper part of the gastro-intestinal tract substantially unchanged. According to one preferred aspect, the carrier of the invention is preferably substantially insoluble in water but may swell in contact with water. According to an alternative preferred aspect, the carrier of the invention is partially or fully soluble in water. Preferred carriers are comprised by the group consisting of starch, modified starch, proteinaceous material such as whey protein, soy protein and casein, other material of vegetable origin such as material originating from oat bran, rice hulls, ground seeds, etc., gums such as gum arabic, pectins, xanthans, and carrageenans. In addition to organic carrier materials inorganic carrier materials used in the foodstuff industry, such as sodium chloride, calcium carbonate, and calcium phosphate, may be used in certain applications. It is also within the scope of the invention to use mixtures of the carrier materials of the invention. In principle, any edible solid particulate carrier material that does not interact, at least not to a substantial degree, with the oil-in-water emulsion in an irreversible manner preventing it from being released on contact with aqueous media to form an oil-in-water emulsion in said aqueous media may be used.

The composition of the invention comprises from 0.5% by weight to 60% by weight of oil-in-water emulsion and from 99.5% by weight to 40% by weight of carrier; more preferred from 0.5 by weight to 40% by weight, most preferred to 30% by weight of oil-in-water emulsion and from 60% by weight, most preferred from 70% by weight, to 99.5 by weight of carrier.

The term aqueous media as used herein comprises water, aqueous solutions of salts such as sodium chloride and/or of organic compounds such as glucose and/or fructose but also aqueous suspensions and/or emulsions of organic material, such as skimmed milk and even gastric fluids. It is preferred for the composition to release more than 50% by weight, more preferred more than 75% by weight, of its oil-in-water emulsion on contact with an aqueous media at a temperature of below 75°C, more preferred of below 50°C, more preferred of below 40°C, most preferred at about 35°C.

According to an additional preferred aspect of the invention the mean particle size (number average) of the emulsion formed by contact of the composition of the invention with an aqueous media exceeds that of the emulsion used for preparing the composition of the invention on contact with the same media by less than 30%, preferably by less than 15%, most preferred by less than 10%.

According to the present invention is also disclosed a method of producing a foodstuff particulate lipid composition as defined above that comprises a particulate solid non-lipid carrier and an oil-in-water emulsion on the carrier capable of being released from the carrier on contact with aqueous media to form an oil-in-water emulsion in said aqueous media. The method comprises the steps of: (a) providing an oil-in-water emulsion in liquid form; (b) providing a particulate solid nonlipid carrier; (c) adding the oil-in-water emulsion to the carrier over a period of time while agitating the carrier to obtain said particulate lipid composition. It is preferred for oil-in-water emulsion to be provided at a temperature of from 30°C to 75°C. It is also preferred to cool the carrier and the product formed from the carrier during addition of the emulsion so as to keep its temperature below 30°C. The method of the invention may comprise the additional step of: (d) separating a fraction of defined particle size from said particulate lipid composition by, for instance, sieving.

The composition of the invention can be used in the manufacture of a foodstuff. In particular it can be used for enriching a foodstuff by adding a portion of the composition of the invention to the foodstuff followed by mixing. Alternatively the composition of the invention as such can be used as a foodstuff.

Also disclosed is a foodstuff comprising the composition of the invention; the foodstuff may be one intended for mixing with an aqueous media, such as skimmed milk, prior to consumption. The edible oil-in-water emulsion obtained thereby is also comprised by the scope of the invention.

Furthermore disclosed is a process for the manufacture of an edible oil-in-water emulsion comprising contacting the composition of the invention with an aqueous media, for instance one comprising carbohydrate and/or peptide material dissolved therein. This process is preferably conducted at a temperature of 35°C or higher.

The invention will now be described in more detail in form of a number of non-limiting embodiments.

### DETAILED DESCRIPTION OF THE INVENTION

*Exemplary non-lipid carrier materials.* A number of exemplary non-lipid carrier materials available on the market are listed in Table 1.

**Table 1. Non-lipid carrier materials**

| | *Non-lipid carrier material* | *Supplier* |
|---|---|---|
| A | Calcium caseinate I, Art. No. 1585. | DMV International |
| B | Whey protein 65% | Arla Foods² |
| C | Isolated soy protein 066-974. PRO-FAM 974 | ADM³ |
| D | Pectin B, Rapid set, Art. No. 7204 | CPKelco⁴ |
| E | Guar Gum, Ceramel, Art. No. 7450 | Swissgum⁵ |
| F | Xanthan, Keltrol RD, Art. No. 2107 | CPKelco |
| G | Microcrystalline cellulose, Avicel-Plus CM 2159, Batch no. C 14731 | FMC⁶ |
| H | Lambda-Carrageenan, Viscarin GP 209F, Lot no. 3091204B | FMC |
| I | Iota-Carrageenan, Viscarin SD, Lot no. 30818040 | FMC |
| K | Waxy maize, Amioca powder, Batch no. GDT 703 | National Starch & Chemical⁷ |
| L | Corn starch, Purity 826 LBI 6545 | National Starch & Chemical |
| M | Potato starch, Art. no. 94441.1 | Carl Roth GmbH & Co.⁸ |
| N | Wheat starch, Art. No. 21 146.290, lot no. M344 | VWR⁹ |

| | | |
|---|---|---|
| ¹ Veghel, Netherlands; ² Stockholm, Sweden; ³ Decatur, IL, U.S.A.; ⁴ Lille Skensved, Denmark; ⁵ Kreuzlingen, Switzerland; ⁵ Philadelphia, PA, U.S.A.; ⁶ Bridgewater, NJ, U.S.A.; ⁷ Karlsruhe, Germany; ⁸ West Chester, PA, U.S.A. | | |

### EXAMPLE 1

*Exemplary method of preparing the composition of the invention.* An oil-in-water lipid emulsion for use in the invention is prepared by mixing weighed amounts of an oil such as palm oil, an emulsifier such as fractionated oat oil, and water with a powerful mechanical mixer such as a T 18 ULTRA-TURRAX® (IKA Werke GmbH & Co. KG, Staufen, Germany). An oil-in-water lipid emulsion of this kind is available on the market (Olibra®; 40% palm oil, 2% fractionated oat oil, in water; Lipid Technologies Provider AB, Karlshamn, Sweden). A weighed amount of the emulsion is added dropwise to a weighed amount of the carrier in a glass flask while gently shaking the flask in intervals. At the end of addition the mixture is stirred with a spatula until apparent homogeneity.

### EXAMPLE 2

*Test of the load capacity of carriers of the invention loaded with the oil-in-water emulsion of the invention*. A number of compositions of the invention were prepared by loading each of the exemplary carriers with increasing amounts of Olibra® oil-in-water emulsion of Example 1. The flowability of the compositions of the invention thus prepared was assessed visually according to the following scale: 6 = fine powder; 5 = fine powder containing larger aggregates (small lumps); 4 = sticky powder; 3 = mixture of powder and large lumps; 2 = large sticky lumps; 1 = smear.

The results the load tests are shown in Table 2.

**Table 2. Exemplary load capacity of carriers according to the invention**

| | *Carrier* | *Olibra, % by weight* | | | | | |
|---|---|---|---|---|---|---|---|
| | | 30 | 40 | 50 | 60 | 70 | 80 |
| A | Ca-caseinate | 6 | 6 | 6 | 5 | 1 | 1 |
| B | Whey protein | 6 | 1 | 1 | 1 | 1 | 1 |
| C | Soy protein | 6 | 6 | 6 | 6 | 1 | 1 |
| D | Pectin | 6 | 6 | 6 | 2 | 1 | 1 |
| E | Guar Gum, | 6 | 6 | 6 | 4 | 3 | 1 |
| F | Xanthan | 6 | 4 | 3 | 2 | 1 | 1 |
| G | Microcrystalline cellulose | 6 | 6 | 6 | 3 | 1 | 1 |
| H | Lambda-Carrageenan | 6 | 6 | 5 | 3 | 1 | 1 |
| I | Iota-Carrageenan | 6 | 6 | 5 | 3 | 1 | 1 |
| K | Waxy maize | 6 | 5 | 2 | 1 | 1 | 1 |
| L | Corn starch | 6 | 6 | 6 | 1 | 1 | 1 |
| M | Potato starch | 5 | 1 | 1 | 1 | 1 | 1 |
| N | Wheat starch | 5 | 1 | 1 | 1 | 1 | 1 |

### EXAMPLE 3

*Effect of carrier on release temperature.* Four compositions of the invention comprising an Olibra®-type oil-in-water emulsion of 26% of palm oil and 2% of fractionated oat oil were prepared by the method in Example 1. The compositions were allowed to equilibrate for 24 h. After dispersing 0.5 g each in 4.5 ml deionized water the release of emulsion particles from the composition into the deionized water was followed over a temperature range of from 20°C to 50°C in intervals of 10°C and confirmed by light microscopy. The results demonstrate that the (threshold) release temperature of emulsion particles depends, i.a., on the nature of the carrier.

### EXAMPLE 4

*Particle size distribution.* A composition of the invention was prepared by the general method of Example 1 by adding the Olibra®-type oil-in-water emulsion of 26% of palm oil and 2% of fractionated oat oil of Example 3 was to whey protein (exemplary carrier B) in an amount to make the composition (free-flowing powder) contain 27% by weight of the emulsion. The composition was allowed to equilibrate for 24 h. The composition (0.5 g) was dispersed in 4.5 ml deionized water at room temperature (B) and compared to a correspondingly prepared aqueous dispersion (A) of the original oil-in-water emulsion with respect to particle size distribution (Figure). This demonstrates that, after addition of the original emulsion to a carrier, a substantial portion of lipid particles released into an aqueous media has about the same size distribution than in the original emulsion; less than 40% by weight of the lipid particles have undergone some degree of coalescence.

### EXAMPLE 5

*Effect of emulsifier on the stability of air-dried or deep-frozen compositions of the invention.* Three oil-in-water emulsions were prepared by the general process of Example 1, all containing 28% by weight of oil phase (26% of palm oil, 2% of emulsifier):
(a) Palm oil/fractionated oat oil (Lipid Technologies Provider AB, Karlshamn, Sweden; with chemical composition 'a';
(b) Sunflower oil (Zeta®, marketed in Sweden by Di Luca & Di Luca AB, Stockholm)/fractionated oat oil (Lipid Technologies Provider AB, Karlshamn, Sweden); with chemical composition 'b';
(c) Sunflower oil (Zeta®, marketed in Sweden by Di Luca & Di Luca AB, Stockholm)/Soy lecithin emulsifier (Leciprime 1000 IP, Cargill, Inc., Minneapolis, MN, U.S.A.); with chemical composition 'c'.

The emulsions (a)-(c) were mixed with whey protein (exemplary carrier B) in a weight ratio of 27 to 73 for compositions of the invention (a*)-(c*), respectively. A portion of each composition (a*)-(c*) was stored at room temperature in closed containers (a*')-(c*'), another portion was heated in an oven to 40°C for four hours and then stored at room temperature in closed containers (a*")-(c*"), and a third portion in closed containers (a*"')-(c*"') was kept at -22°C for 24 h in closed containers followed by storage at room temperature in the same containers. A portion of each of the powders was dispersed in deionised water (4.5 g) at room temperature. The particle size of the released emulsions was determined by a Mastersizer 2000 instrument (Malvern Instruments Ltd., Malvern, UK). The results are shown in Table 5; d(0.5) represents the arithmetic number mean size of the lipid particles in nm.

**Table 3. Arithmetic number mean size of lipid particles released from the composition of the invention and the oil-in-water emulsion used for its preparation**

| Sample | d_{(0.5)}, nm | | |
|---|---|---|---|
| | Chemical composition | | |
| | 'a' | 'b' | 'c' |
| Original emulsion (a)-(c) | 275 | 304 | 367 |
| Composition (a*')-(c*') | 310 | 458 | 553 |
| Composition after drying (a*")-(c*") | 308 | 566 | 1787 |
| Composition after freezing (a*"')-(c*"') | 435 | 578 | 1890 |

The results in Table 3 demonstrate the usefulness of various oils and emulsifiers for preparing the composition of the invention. The superiority of a galactolipid (fractionated oat oil) emulsifier over a phospholipid (soy lecithin) emulsifier is also demonstrated, especially in regard of drying and freezing stability.

### EXAMPLE 6

*Effect of an oil-in-water emulsion of the composition of the invention containing a hydrocolloid*. Two compositions of the invention were prepared by the general method of Example 1 by adding an oil-in-water emulsion of 20% by weight of rapeseed oil (purchased from the retail market), 4% by weight of fractionated oat oil of Example 3, and 2% by weight of Glucagel (Polycell Technologies, Crookston, MN, USA; containing 75% by weight of beta-glucan) to whey protein (exemplary carrier B) and calcium caseinate (exemplary carrier A) respectively. In both cases the proportion of emulsion to carrier (w/w) was 20:80.

The powders were easily dispersed in deionised water at ambient temperature. The dispersions were smooth without lumps and had higher viscosities compared to dispersions with only caseinate or whey protein. The released emulsion particles were observed by means of optical microscopy.

### EXAMPLE 7

*Odour masking.* Four compositions of the invention were prepared by the general method of Example 1 by adding an oil-in-water emulsion of 40% by weight of fish oil (EPAX 3000; ProNova Biocare, Norway) and 5% by weight of fractionated oat oil of Example 3 to four carriers: whey protein (exemplary carrier B), soy protein (exemplary carrier C), corn starch (exemplary carrier L) and microcrystalline cellulose (exemplary carrier G).

While the emulsion had a slight but typical odour of fish oil, the powderous solid compositions of the invention were practically odour-free. After a week in a refrigerator none of the powders exhibited a fish oil odour.

Each of the four compositions of this Example was separately treated with 4 g of membrane filtered water at ambient temperature (about 20° C). In the products no fish oil odour could be detected.

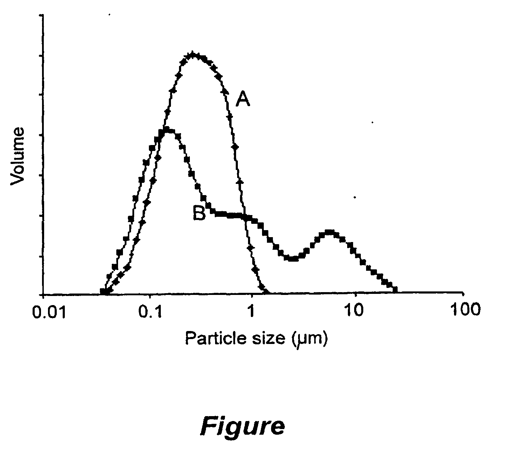

## Claims

1. Foodstuff particulate lipid composition comprising a particulate solid non-lipid carrier and an oil-in-water emulsion on the carrier capable of being released from the carrier on contact with aqueous media to form an oil-in-water emulsion in said aqueous media, wherein the carrier does not dissolve in the oil-in-water emulsion, the composition comprises from 0.5% by weight to 60% by weight of oil-in-water emulsion and from 99.5% by weight to 40% by weight of carrier and wherein the oil phase of the oil-in-water emulsion comprises a non-polar lipid and a lipidic emulsifier comprising galactolipid material.

2. The composition of claim 1, comprising from 0.5 by weight to 40% by weight of oil-in-water emulsion and from 60% by weight to 99.5 by weight of carrier.

3. The composition of claim 1, comprising from 0.5 by weight to 30% by weight of oil-in-water emulsion and from 70% by weight to 99.5% by weight of carrier.

4. The composition of claim 1, wherein the non-polar lipid is selected from natural, semi-synthetic and synthetic oils.

5. The composition of claim 4,wherein the non-polar lipid is a natural oil, of which more than 90% by weigh is comprised by palmitic, oleic, linoleic, linolenic, and stearic esters of glycerol.

6. The composition of claim 4, wherein the oil is selected from palm oil and its equivalent confectionary fats, such as coconut oil, palm kernel oil, cocoa butter, partially hydrogenated soybean oil partly hydrogenated rapeseed oil; sunflower oil and its equivalent liquid vegetable oils, such as soybean oil, rapeseed oil, safflower oil, olive oil, corn oil, groundnut oil, linseed oil, rice bran oil, evening primrose oil, borage oil, and sesame oil; animal fats and oils, such as fish oil, butter fat, lard, tallow, their fractions and mixtures thereof.

7. The composition of claim 1, wherein the galactolipid material comprises 20% by weight to 30% by weight of galactolipids, mainly digalactodiacylglycerol, and from 10% by weight to 15% by weight of other polar lipids.

8. The composition of claim 1 - 7, wherein the carrier is selected from foodstuff of vegetable, animal or mixed origin.

9. The composition of claim 8 wherein the carrier is selected from starch; modified starch; proteinaceous material such as whey protein, soy protein and casein; other material of vegetable origin such as material originating from oat bran, rice hull, ground seed; gum such as gum arabic; pectin; xanthan; and carrageenan.

10. The composition of claim 8, wherein the carrier comprises more than 50% by weight of starch; modified starch; proteinaceous material such as whey protein, soy protein and casein; other material of vegetable origin such as material originating from oat bran, rice hull, ground seed; gum such as gum arabic; pectin; xanthan; and carrageenan.

11. The composition of any of claims 1 - 7, wherein the carrier is selected from inorganic material, such as sodium chloride, calcium carbonate, calcium phosphate.

12. The composition of any of claims 1 - 10, wherein the carrier is capable of passing substantially unchanged at least the upper part of the gastro-intestinal tract.

13. The composition of any of claims 1-10, wherein the carrier is substantially insoluble in water.

14. The composition of claim 1 - 13 capable of forming an oil-in-water emulsion on contact with an aqueous media from more than 50% by weight of its oil-in-water emulsion.

15. Method of forming a foodstuff particulate lipid composition of any of claims 1-14 comprising a particulate solid non-lipid carrier and an oil-in-water emulsion on the carrier capable of being released from the carrier on contact with aqueous media to form an oil-in-water emulsion in said aqueous media, comprising the steps of:
(a) providing an oil-in-water emulsion in liquid form;
(b) providing a particulate solid non-lipid carrier;
(c) adding the oil-in-water emulsion to the carrier over a period of time while agitating the carrier to obtain said particulate lipid composition.

16. The method of claim 15, wherein the oil-in-water emulsion is provided at a temperature of from 30°C to 75°C.

17. The method of claim15 or 16, comprising keeping the carrier during said addition at a temperature of below 30°C.

18. The method of claim 15 or 16, comprising the additional step of: (d) separating a fraction of defined particle size from said particulate lipid composition.

19. Use of the composition of any of claims 1 -14 in the manufacture of a foodstuff.

20. Use of the composition of any of claims 1 - 14 as a foodstuff.

21. A foodstuff comprising the composition of any of claims 1-14.

22. The foodstuff of claim 21 intended for mixing with an aqueous media prior to consumption.

23. An edible oil-in-water emulsion obtainable by contacting the composition of any of claims 1 - 7 with an aqueous media.

24. A process for manufacture of an edible oil-in-water emulsion comprising contacting the composition of any of claims 1 - 7 with an aqueous media.

25. The process of claim 24 conducted at a temperature of 35°C and higher.

26. The process of claim 24 or 25, wherein the aqueous media comprises carbohydrate material dissolved therein.

27. The process of any of claims 24 - 26, wherein the aqueous media comprises peptide material dissolved therein.

## Patentansprüche

1. Teilchenförmige Nahrungsmittel-Lipidzusammensetzung, umfassend einen teilchenförmigen, festen Nichtlipid-Träger und eine Öl-in-Wasser-Emulsion auf dem Träger, die bei Kontakt mit wässrigen Medien von dem Träger freigesetzt werden kann, um eine Öl-in-Wasser-Emulsion in dem wässrigen Medium zu bilden, wobei sich der Träger nicht in der Öl-in-Wasser-Emulsion löst, wobei die Zusammensetzung von 0,5 Gew.-% bis 60 Gew.-% an Öl-in-Wasser-Emulsion und von 99,5 Gew.-% bis 40 Gew.-% an Träger umfasst und wobei die Ölphase der Öl-in-Wasser-Emulsion ein nichtpolares Lipid und einen lipidischen Emulgator, umfassend Galactolipid-Material, umfasst.

2. Zusammensetzung gemäß Anspruch 1, umfassend von 0,5 Gew.-% bis 40 Gew.-% an Öl-in-Wasser-Emulsion und von 60 Gew.-% bis 99,5 Gew.-% an Träger.

3. Zusammensetzung gemäß Anspruch 1, umfassend von 0,5 Gew.-% bis 30 Gew.-% an Öl-in-Wasser-Emulsion und von 70 Gew.-% bis 99,5 Gew.-% an Träger.

4. Zusammensetzung gemäß Anspruch 1, wobei das nichtpolare Lipid ausgewählt ist aus natürlichen, halbsynthetischen und synthetischen Ölen.

5. Zusammensetzung gemäß Anspruch 4, wobei das nichtpolare Lipid ein natürliches Öl ist, von dem mehr als 90 Gew.-% aus Palmitin-, Olein-, Linol-, Linolen- und Stearinestern von Glycerol bestehen.

6. Zusammensetzung gemäß Anspruch 4, wobei das Öl ausgewählt ist aus Palmöl und seinen äquivalenten Konditorfetten, wie z. B. Kokosnussöl, Palmkernöl, Kakaobutter, teilhydriertes Sojabohnenöl, teilhydriertes Rapsöl; Sonnenblumenöl und seinen äquivalenten flüssigen Pflanzenölen, wie z. B. Sojabohnenöl, Rapsöl, Distelöl, Olivenöl, Maisöl, Erdnussöl, Leinöl, Reiskleieöl, Nachtkerzenöl, Borretschöl und Sesamöl; Tierfette und -öle, wie z. B. Fischöl, Butterfett, Schmalz, Talg, ihre Fraktionen und Gemische davon.

7. Zusammensetzung gemäß Anspruch 1, wobei das Galactolipid-Material 20 Gew.-% bis 30 Gew.-% Galactolipide, hauptsächlich Digalactodiacylglycerol, und von 10 Gew.-% bis 15 Gew.-% an anderen polaren Lipiden umfasst.

8. Zusammensetzung gemäß Anspruch 1-7, wobei der Träger ausgewählt ist aus Nahrungsmitteln mit pflanzlichem, tierischem oder gemischtem Ursprung.

9. Zusammensetzung gemäß Anspruch 8, wobei der Träger ausgewählt ist aus Stärke; modifizierter Stärke; proteinösem Material, wie z. B. Molkeprotein, Sojaprotein und Kasein; anderem Material mit pflanzlichem Ursprung, wie z. B. Material mit Ursprung aus Haferkleie, Reisschalen, gemahlenen Samen; Gummi, wie z. B. Gummi arabicum; Pectin; Xanthan; und Carrageen.

10. Zusammensetzung gemäß Anspruch 8, wobei der Träger mehr als 50 Gew.-% Stärke; modifizierte Stärke; proteinöses Material, wie z. B. Molkeprotein, Sojaprotein und Kasein; anderes Material mit pflanzlichem Ursprung, wie z. B. Material mit Ursprung aus Haferkleie, Reisschalen, gemahlenen Samen; Gummi, wie z. B. Gummi arabicum; Pectin; Xanthan; und Carrageen umfasst.

11. Zusammensetzung gemäß einem der Ansprüche 1-7, wobei der Träger ausgewählt ist aus anorganischem Material, wie z. B. Natriumchlorid, Calciumcarbonat, Calciumphosphat.

12. Zusammensetzung gemäß einem der Ansprüche 1-10, wobei der Träger im Wesentlichen unverändert durch wenigstens den oberen Teil des Gastrointestinaltrakts passieren kann.

13. Zusammensetzung gemäß einem der Ansprüche 1-10, wobei der Träger im Wesentlichen unlöslich in Wasser ist.

14. Zusammensetzung gemäß Anspruch 1-13, die bei Kontakt mit einem wässrigen Medium aus mehr als 50 Gew.-% ihrer Öl-in-Wasser-Emulsion eine Öl-in- Wasser-Emulsion bilden kann.

15. Verfahren zum Herstellen einer teilchenförmigen Nahrungsmittel-Lipidzusammensetzung gemäß einem der Ansprüche 1-14, umfassend einen teilchenförmigen, festen Nichtlipid-Träger und eine Öl-in-Wasser-Emulsion auf dem Träger, die bei Kontakt mit wässrigen Medien von dem Träger freigesetzt werden kann, um eine Öl-in-Wasser-Emulsion in dem wässrigen Medium zu bilden, umfassend die Schritte:
(a) Bereitstellen einer Öl-in-Wasser-Emulsion in flüssiger Form;
(b) Bereitstellen eines teilchenförmigen, festen Nichtlipid-Trägers;
(c) Zugeben der Öl-in-Wasser-Emulsion zu dem Träger über einen Zeitraum unter Bewegung des Trägers, um die teilchenförmige Lipidzusammensetzung zu erhalten.

16. Verfahren gemäß Anspruch 15, wobei die Öl-in- Wasser-Emulsion mit einer Temperatur von 30°C bis 75°C bereitgestellt wird.

17. Verfahren gemäß Anspruch 15 oder 16, umfassend das Halten des Trägers bei einer Temperatur von unter 30°C während des Zugebens.

18. Verfahren gemäß Anspruch 15 oder 16, umfassend den zusätzlichen Schritt:
(d) Abtrennen einer Fraktion mit definierter Teilchengröße von der teilchenförmigen Lipidzusammensetzung.

19. Verwendung der Zusammensetzung gemäß einem der Ansprüche 1-14 bei der Herstellung eines Nahrungsmittels.

20. Verwendung der Zusammensetzung gemäß einem der Ansprüche 1-14 als Nahrungsmittel.

21. Nahrungsmittel, umfassend die Zusammensetzung gemäß einem der Ansprüche 1-14.

22. Nahrungsmittel gemäß Anspruch 21, das zum Mischen mit einem wässrigen Medium vor dem Verbrauch vorgesehen ist.

23. Verzehrbare Öl-in-Wasser-Emulsion, erhältlich durch Kontaktieren der Zusammensetzung gemäß einem der Ansprüche 1-7 mit einem wässrigen Medium.

24. Verfahren zum Herstellen einer verzehrbaren Öl-in-Wasser-Emulsion, umfassend das Kontaktieren der Zusammensetzung gemäß einem der Ansprüche 1-7 mit einem wässrigen Medium.

25. Verfahren gemäß Anspruch 24, das bei einer Temperatur von 35°C oder höher geführt wird.

26. Verfahren gemäß Anspruch 24 oder 25, wobei das wässrige Medium darin gelöstes Kohlenhydratmaterial umfasst.

27. Verfahren gemäß einem der Ansprüche 24-26, wobei das wässrige Medium darin gelöstes Peptidmaterial umfasst.

## Revendications

1. Composition lipidique particulaire alimentaire comprenant un support non lipidique solide particulaire et une émulsion huile dans l'eau sur le support susceptible d'être libérée du support dès contact avec du milieu aqueux pour former une émulsion huile dans l'eau dans ledit milieu aqueux, le support ne se dissolvant pas dans l'émulsion huile dans l'eau, la composition comprenant de 0,5% en poids à 60% en poids d'emulsion huile dans l'eau et de 99,5% en poids à 40% en poids de support et la phase huileuse de l'émulsion huile dans l'eau comprenant un lipide non polaire et un émulsifiant lipidique comprenant de la matière galactolipidique.

2. Composition selon la revendication 1, comprenant de 0,5% en poids à 40% en poids d'émulsion huile dans l'eau et de 60% en poids à 99,5% en poids de support.

3. Composition selon la revendication 1, comprenant de 0,5% en poids à 30% en poids d'émulsion huile dans l'eau et de 70% en poids à 99,5% en poids de support.

4. Composition selon la revendication 1, **caractérisée en ce que** le lipide non polaire est choisi parmi les huiles naturelles, semi-synthétiques et synthétiques.

5. Composition selon la revendication 4, **caracterisée en ce que** le lipide non polaire est une huile naturelle, dont plus de 90% en poids sont constitués d'esters palmitique, oléique, linoléique, linolénique et stéarique du glycérol.

6. Composition selon la revendication 4, **caractérisée en ce que** l'huile est choisie parmi l'huile de palme et les graisses de confiserie équivalentes de celle-ci, telles que l'huile de coco, l'huile de palmiste, le beurre de cacao, l'huile de soja partiellement hydrogénée, l'huile de colza partiellement hydrogénée ; l'huile de tournesol et les huiles végétales liquides équivalentes à celle-ci, telles que l'huile de soja, l'huile de colza, l'huile de carthame, l'huile d'olive, l'huile de maïs, l'huile d'arachide, l'huile de lin, l'huile de son de riz, l'huile d'onagre, l'huile de bourrache, et l'huile de sésame ; les graisses et huiles animales, telles que l'huile de poisson, la graisse de beurre, le saindoux, le suif, leurs fractions et les mélanges de ceux-ci.

7. Composition selon la revendication 1, **caractérisée en ce que** la matière galactolipidique comprend de 20% en poids à 30% en poids de galactolipides, principalement le digalacto-diacylglycérol, et de 10% en poids à 15% en poids d'autres lipides polaires.

8. Composition selon les revendications 1 à 7, **caractérisée en ce que** le support est choisi parmi des aliments d'origine végétale, animale ou mixte.

9. Composition selon la revendication 8, **caractérisée en ce que** le support est choisi parmi l'amidon; l'amidon modifié; une matière protéinique telle que la protéine de lactosérum, la protéine de soja et la caséine; une autre matière d'origine végétale telle qu'une matière provenant du son d'avoine, de l'écorce de riz, de graines broyées; de la gomme telle que la gomme arabique; de la pectine; du xanthane; et du carraghénane.

10. Composition selon la revendication 8, **caractérisée en ce que** le support comprend plus de 50% en poids d'amidon; d'amidon modifié; d'une matière protéinique telle que la protéine de lactosérum, la protéine de soja et la caséine; d'une autre matière d'origine végétale telle qu'une matière provenant de son d'avoine, d' écorce de riz, de graines broyées; d'une gomme telle que la gomme arabique; de la pectine; du xanthane; et du carraghénane.

11. Composition selon l'une quelconque des revendications 1 à 7, **caractérisée en ce que** le support est choisi parmi une matière minérale telle que le chlorure de sodium, le carbonate de calcium, le phosphate de calcium.

12. Composition selon l'une quelconque des revendications 1 à 10, **caractérisée en ce que** le support est susceptible de passer sensiblement inchangé au moins la partie supérieure du tractus gastro-intestinal.

13. Composition selon l'une quelconque des revendications 1 à 10, **caractérisée en ce que** le support est sensiblement insoluble dans l'eau.

14. Composition selon les revendications 1 à 13, susceptible de former une émulsion huile dans l'eau dès contact avec un milieu aqueux à partir de plus de 50% en poids de son émulsion huile dans l'eau.

15. Méthode d'obtention d'une composition lipidique particulaire alimentaire selon l'une quelconque des revendications 1 à 14, comprenant un support non lipidique solide particulaire et une émulsion huile dans l'eau sur le support susceptible d'etre libérée du support dès contact avec du milieu aqueux pour former une emulsion huile dans l'eau dans ledit milieu aqueux, comprenant les étapes consistant à:
(a) obtenir une émulsion huile dans l'eau sous forme liquide;
(b) obtenir un support non lipidique solide particulaire;
(c) ajouter l'émulsion huile dans l'eau au support sur une (c) ajouter l'émulsion huile dans l'eau au support sur une période de temps tout en agitant le support pour obtenir ladite composition lipidique particulaire.

16. Méthode selon la revendication 15, **caracterisée en ce que** l'émulsion huile dans l'eau est obtenue à une température de 30°C à 75°C.

17. Méthode selon la revendication 15 ou 16, comprenant le maintien du support pendant ladite addition à une température inférieure à 30°C.

18. Méthode selon la revendication 15 ou 16, comprenant l'étape supplémentaire consistant à :
(d) séparer une fraction de taille de particules définie de ladite composition lipidique particulaire.

19. Utilisation de la composition selon l'une quelconque des revendications 1 à 14, dans la fabrication d'un aliment.

20. Utilisation de la composition selon l'une quelconque des revendications 1 a 14, comme aliment.

21. Aliment comprenant la composition selon l'une quelconque des revendications 1 à 14.

22. Aliment selon la revendication 21, destiné à être mélangé avec un milieu aqueux avant consommation.

23. Emulsion huile dans l'eau comestible susceptible d'être obtenue par la mise en contact de la composition selon l'une quelconque des revendications 1 à 7 avec un milieu aqueux.

24. Procédé de fabrication d'une émulsion huile dans l'eau comestible comprenant la mise en contact de la composition selon l'une quelconque des revendications 1 à 7 avec un milieu aqueux.

25. Procédé selon la revendication 24, effectué à une température de 35°C et plus.

26. Procédé selon la revendication 24 ou 25, **caracterisé en ce que** le milieu aqueux comprend de la matière glucidique dissoute dans celui-ci.

27. Procédé selon l'une quelconque des revendications 24 à 26, **caracterisé en ce que** le milieu aqueux comprend une matière peptidique dissoute dans celui-ci.
